# EUROPEAN PATENT APPLICATION

(11) **EP 4 678 477 A1**
(43) Date of publication of application: **14.01.2026**
(21) Application number: 25186931.9
(22) Date of filing: 02.07.2025
(51) Int. Cl.: B60R 11/02, B60J 3/02, B60R 13/02

(54) **MOTOR VEHICLE PROVIDED WITH AT LEAST ONE LOUDSPEAKER PLACED AT AN UPPER CROSS MEMBER SUPPORTING A WINDSHIELD**

(30) Priority: 08.07.2024 IT 202400015649
(71) Applicant: FERRARI S.p.A., 41100 Modena (IT)
(72) Inventor: EBRI, Michele, 41100 MODENA (IT); RONCARATI, Giacomo, 41100 MODENA (IT); PRINCIPE, Paolo, 41100 MODENA (IT)
(74) Representative: Studio Torta S.p.A.

(57) **Abstract**

A motor vehicle (1) includes a windshield (6) and a body (3) in turn comprising a windshield frame (10) with a lower cross member (11) forming a support base supporting the windshield (6) from below and an upper cross member (13) vertically spaced from the lower cross member (11) and attached to the windshield (6), the motor vehicle (1) further comprising a passenger compartment (2) and one or more trim panels carried by the body (3) so as to cover the body (3) internally, thereby defining inner surfaces of the passenger compartment (2), wherein a panel portion (20) of the trim panels faces a lower wall (16) of the upper cross member (13) to cover the upper cross member (13) from below, the motor vehicle (1) comprising at least one loudspeaker (21) arranged between the panel portion (20) and an upper wall (17) of the upper cross member (13) opposite the lower wall (16) according to a thickness of the upper cross member (13).

## Description

### CROSS-REFERENCE TO RELATED APPLICATIONS

This patent application claims priority from Italian patent application no. 102024000015649 filed on July 8, 2024, the entire disclosure of which is incorporated herein by reference.

### TECHNICAL FIELD

The invention relates to a motor vehicle and more in particular to an arrangement of one or more loudspeakers of the motor vehicle.

### PRIOR ART

As is known, a motor vehicle has a body defining a passenger compartment for accommodating at least a driver and optionally one or more passengers.

Normally, the motor vehicle further includes an audio system for the emission of sounds inside the passenger compartment.

The audio system includes, in turn, a plurality of loudspeakers, which reproduce the sounds and can be arranged between the body and trim panels which cover the body from the inside, thereby defining the inner walls of the passenger compartment.

In general, the need is felt to position the loudspeakers in the most convenient way possible, namely to identify volumes between the body and the trim panels sufficiently large to accommodate the structure of the loudspeakers without affecting the spaces intended by design for other essential components of the motor vehicle or sacrificing part of the minimum volumes provided for in the passenger compartment for the occupants as required by homologation requirements.

On the other hand, the need is also felt to position the loudspeakers in effective or strategic points so as to optimize the functionality of the loudspeakers, for example improving the immersive aspect and more in general the quality or pleasantness of the sounds reproduced and perceived by the occupants.

In some cases, the needs set forth above interfere with one another, therefore a third need may be to find a good compromise between sound reproduction effectiveness and minimization of the impact given by the bulk of the loudspeakers.

The compromise becomes even more challenging when the loudspeakers must be arranged according to a certain array, for example for allowing a binaural audio reproduction, in particular by means of beamforming algorithms applied to more arrayed loudspeakers.

An object of the invention is to satisfy at least one of the needs set forth above.

### DESCRIPTION OF THE INVENTION

The object is achieved by a motor vehicle as defined in claim 1.

The dependent claims define particular embodiments of the invention.

### BRIEF DESCRIPTION OF THE DRAWINGS

In order to better understand the invention, an embodiment thereof is described in the following by way of non-limiting example and with reference to the accompanying drawings, wherein:
- Figure 1 is a schematic side view of a motor vehicle, with parts removed for clarity, according to an embodiment of the invention,
- Figure 2 is a schematized section of an upper portion of the motor vehicle of Figure 1 according to a vertical section plane,
- Figures 3, 4 are sections similar to that of Figure 2 referred to respective motor vehicles according to further embodiments of the invention, and
- Figure 5 is a rear view of a portion of passenger compartment of the motor vehicles according to the embodiments of Figures 3, 4.

### EMBODIMENTS OF THE INVENTION

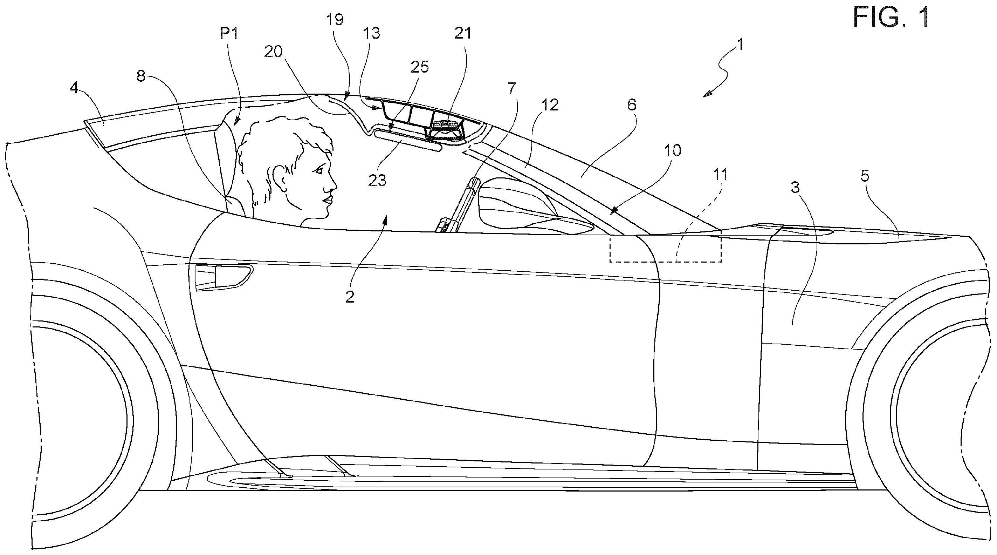

In Figure 1, reference numeral 1 is used to indicate, as a whole, a motor vehicle.

As all motor vehicles, the motor vehicle 1 has a normal advancement direction or roll axis and comprises a passenger compartment 2 for accommodating at least a driver and possibly one or more passengers. The driver and the passengers define the occupants of the passenger compartment 2.

More in detail, the passenger compartment 2 houses a seating position P1 for the driver provided with at least a steering wheel 7 and a seat 8 for the driver. In particular, the passenger compartment 2 also houses a seating position P2 for a passenger with a seat 8b for the passenger next to the seating position P1 of the driver or of the seat 8 according to a direction which is horizontal and orthogonal to the advancement direction, namely according to a pitch axis of the motor vehicle 1.

Behind the seating position P for the driver, according to the roll axis, the passenger compartment 2 could house one or more further seating positions for passengers, in turn provided with one or more respective seats for the passengers.

The motor vehicle 1 comprises a body 3, which defines or borders the passenger compartment 2.

Furthermore, the motor vehicle 1 comprises a plurality of outer panels, namely visible from the outside of the motor vehicle 1, such as for example a hood 5 and a roof 4. The outer panels are supported in a fixed position by the body 3, namely are fixed with respect to it, more precisely attached to it.

Furthermore, the motor vehicle 1 comprises a windshield 6, which is part for example of the outer panels.

The body 3 further comprises a frame or windshield frame 10 which borders and supports the windshield 6, which is attached to the frame 10.

The frame 10 comprises a lower cross member 11 forming a support base for supporting the windshield 6 from below. In other words, the windshield 6 is arranged above the cross member 11.

The cross member 11 comprises or more precisely is a beam, in particular with a greater extension in width or along the pitch axis.

Furthermore, the frame 10 comprises a pair of uprights 12 respectively attached to opposite side ends of the cross member 11, namely opposite ends with respect to the pitch axis.

The uprights 12 extend transversely with respect to the cross member 11 upward.

The frame 10 further comprises an upper cross member 13 extending in width or along the pitch axis between two side ends of the upper cross member 13, in particular attached to the uprights 12.

The cross member 13 is arranged above the uprights 12 and clearly also above the cross member 11.

In greater detail, the cross member 13 comprises or more precisely is a beam.

The cross member 13 comprises a plurality of walls, in particular arranged so as to enclose an inner volume 15, therefore it is more in particular of box-like type.

Between the walls, the cross member 13 comprises a lower wall 16 facing the passenger compartment 2 and an upper wall 17 opposite the lower wall 16 according to a thickness of the cross member 13.

The lower wall defines, in particular, a lower end of the cross member 13.

The windshield 6 is attached to the cross member 13, in particular directly, for example by means of gluing or fastening devices, such as threaded members, rivets, and the like.

In particular, the windshield 6 is attached to the cross member 13 at the upper wall 17.

The motor vehicle 1 comprises a plurality of trim panels which cover the inside of the body 3 defining the inner surfaces of the passenger compartment 2, i.e. the surfaces visible by the occupants of the motor vehicle 1 or bordering the passenger compartment 2.

The trim panels comprise a panel portion 20 which faces the lower wall 16, in particular directly, so as to cover the cross member 13 from below. In other words, the panel portion 20 separates the passenger compartment 2 from a volume 19 which accommodates the cross member 13. Still in other words, the panel portion 20 hides the cross member 13 from the occupants of the passenger compartment 2.

The volume 19 is defined, for example directly, between the roof 4 or the windshield 6 and the panel portion 20.

The motor vehicle 1 comprises a loudspeaker 21 or a plurality of loudspeakers 21 arranged between the panel portion 20 and the upper wall 17. In other words, the loudspeakers 21 are located inside the volume 19.

The loudspeakers 21 are configured to emit sound toward the passenger compartment 2 and thus toward the panel portion 20. The loudspeakers 21 emit sound along an emission direction directed toward the panel portion 20 and the passenger compartment 2. The emission direction meets the panel portion 20 in a region 24 thereof permeable to sound, for example a region conformed as a grid or net.

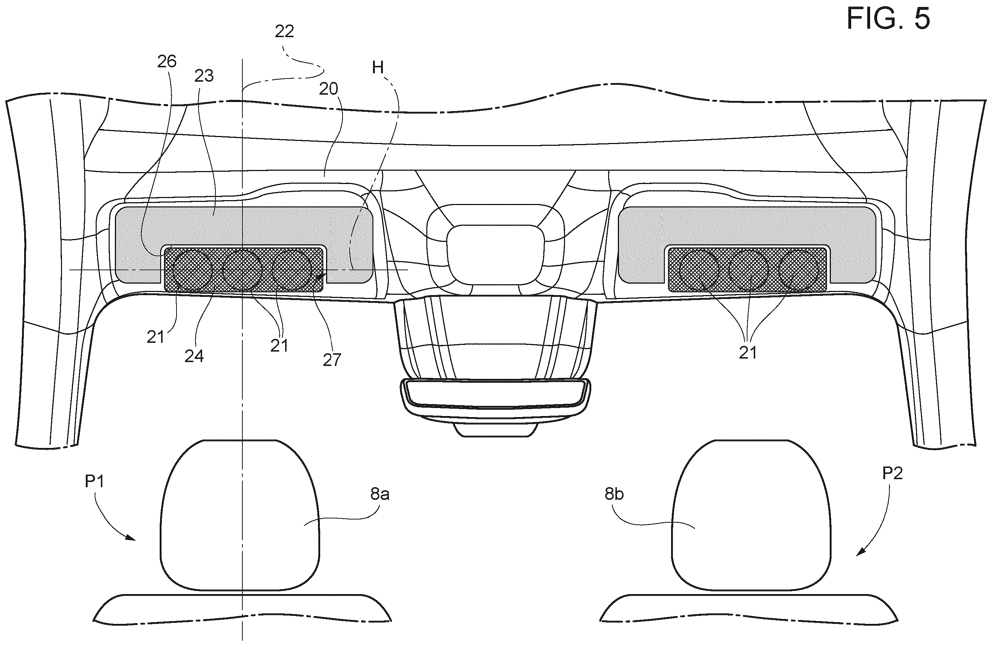

The panel portion 20 is arranged above and facing the seat 8 or the relative seating position P1. The loudspeakers 21 are arranged frontally above with respect to the seat 8 or the relative seating position P1, preferably in a central position with respect to the seat 8 or the relative seating position P1. Alternatively or additionally, the loudspeakers 21 are arranged symmetrically with respect to a plane of vertical symmetry 22 (represented by a line in Figure 5), which defines more in particular a central line of the seat 8 or of the relative seating position P1. In this manner, the loudspeakers 21 are made particularly suitable for the emission of binaural audio, in particular by means of sound beamforming algorithms generated by the loudspeakers 21. Herein, the seat 8 is specifically for the driver, but it could be generalized to any seat for an occupant of the motor vehicle 1, such as for example the seat 8b.

Preferably, the loudspeakers 21 are arranged in a row with respect to one another, for example according to an alignment direction parallel to the pitch axis.

Conveniently, the motor vehicle 1 further comprises a sun visor 23 coupled to the panel portion 20 and more precisely hinged to it around a hinge axis H parallel to the pitch axis.

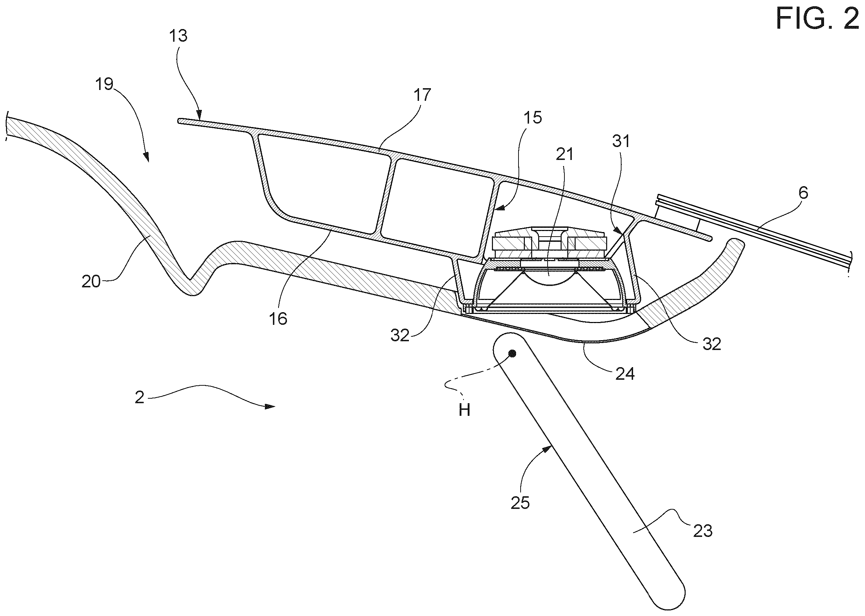

The sun visor 23 is movable with respect to the panel portion 20 between an open configuration (Figure 2) and a closed configuration (Figure 1).

In the open configuration, the sun visor 23 protrudes or cantilevers downward with respect to the panel portion 20 so as to partially cover an inner side of the windshield 6.

In the closed configuration, the sun visor 23 extends adjacent to the panel portion 20. In other words, the sun visor 23 in the closed configuration faces the panel portion 20 or more in particular has a face 25 facing the panel portion 20 or adhering to the panel portion 20.

In the embodiment of Figures 1 and 2, the panel portion 20 is entirely arranged, in particular directly, between the sun visor 23, for example in the closed configuration, and the lower wall 16.

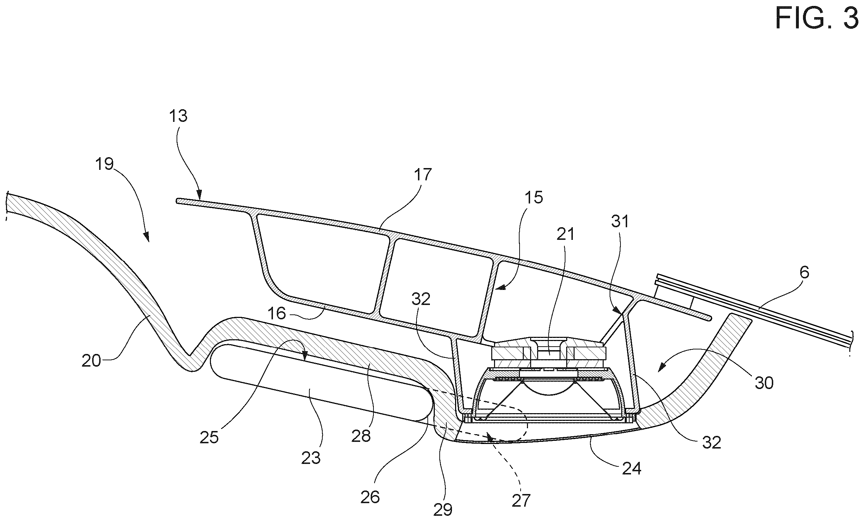

In the embodiments of Figures 3, 4, 5, the sun visor 23 defines a border 26 of a slot 27, which in particular defines a through-opening of the sun visor 23, more in particular according to a thickness thereof.

Herein, the panel portion 20 has a first part 28 arranged, in particular directly, between the sun visor 23 (in particular in the closed configuration) and the lower wall 16.

Furthermore, the panel portion 20 has a second part 29 extending through or inside the slot 27, at least when the sun visor 23 is in the closed configuration. The second part 29 defines a compartment 30 (in particular directly) between the second part 29 and the lower wall 16. In this manner, with respect to the embodiment of Figure 2, the volume 19 for accommodating the loudspeakers 21 is greater, in particular thanks to the space freed by the slot 27.

Preferably, the border 26 is open, i.e. does not have a profile defining a closed area on its inside. Independently, the slot 27 is preferably placed at the axis H. In other words, the axis H passes through the slot 27 or extends at the slot 27.

The slot 27 conveniently uncovers the region 24 of the panel portion 20. In other words, the region 24 faces the slot 27 or is located at the slot 27.

In the embodiments of Figures 2, 3, the loudspeakers 21 are carried by the cross member 13 in a fixed position with respect to the cross member 13.

Herein, the loudspeakers 21 are attached to the cross member 13, in particular directly. Optionally, the loudspeakers 21 can comprise a typical adaptor (for example a spacer or support suitable for avoiding vibrations of the cabinet of the loudspeakers 21) configured to be mounted on the cross member 13, in particular directly.

For example, but not necessarily, the loudspeakers 21 could at least partially occupy the inner volume 15.

Herein, in particular, the lower wall 16 has one or more through-holes 31, which put the inner volume 15 in communication with the outside of the cross member 13. The loudspeakers 21 are arranged through the one or more through-holes 31, in particular so as to be partially inside the inner volume 15 and partially outside the cross member 13.

Conveniently, each of the loudspeakers 21 could be arranged with respect to the cross member 13 such that the walls of the cross member 13 define with the inner volume 15 a resonance cabinet.

For example, the cross member 13 can comprise one or more brackets or ribs 32 protruding with respect to the lower wall 16 toward the panel portion 20. Each of the loudspeakers 21 could be attached to the cross member 13 at the brackets 32 or be directly attached to the brackets 32.

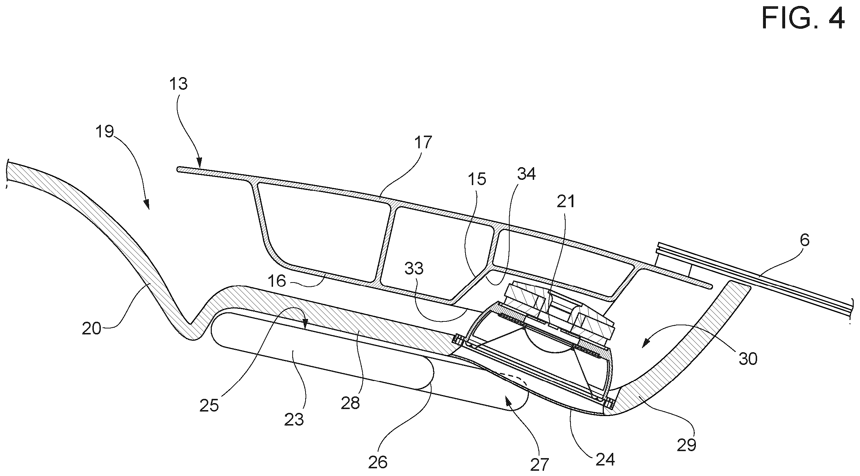

In the embodiments of Figures 3, 4, the loudspeakers 21 are arranged at least partially at the compartment 30. More in particular, in the embodiment of Figure 4, the loudspeakers 21 are entirely arranged at the compartment 30.

Furthermore, independently, in the embodiment of Figure 4, the lower wall 16 has a region 33 conformed concavely with respect to the remainder of the lower wall toward the panel portion 20.

In this manner, the region 33 defines a recess 34 of the cross member 13.

The loudspeakers 21 are arranged at least partially at the recess 34.

The compartment 30 and the recess 34, even if they could communicate with each other or make a single space, are characteristics independent of each other, therefore each of them could be present or absent regardless of the other. Both the compartment 30 and the recess 34 are anyway advantageous since they determine an increase in the volume 19 with respect to embodiments in which they are respectively absent.

In the embodiment of Figure 4, in particular, the loudspeakers 21 are carried from below by the panel portion 20 in a fixed position with respect to the panel portion 20. For example, the loudspeakers 21 could be attached to the panel portion 20, in particular directly.

As is indicated by the expression "in particular", the fact that the loudspeakers 21 are carried from below by the panel portion 20 is optional and not necessary or limiting; for example, the loudspeakers 21 could be carried by the cross member 13 in a fixed position with respect to the cross member 13, for example by means of the brackets 32, as in Figures 2 and 3.

Based on the foregoing, the advantages of the motor vehicle 1 according to the invention are evident.

The positioning between the panel portion 20 and the upper wall 17 of the cross member 13 allows the loudspeakers 21 to have increased dimensions and powers.

The recess 34, the inner volume 15, and the compartment 30 form empty spaces which allow installing the loudspeakers 21 in a region of the motor vehicle 1 where such installation is complex due to the homologation requirements of the motor vehicles.

Furthermore, the inner volume 15 of the cross member 13 can be effectively utilized as resonance cabinet for the loudspeakers 21.

Thanks to all this, the immersive aspect of the sound reproduced for the occupants can be improved.

Furthermore, the loudspeakers 21 can be utilized alternatively or additionally for the execution of road or ambient noise cancelling methods.

The volume 19 allows an alignment of the loudspeakers 21 along the pitch axis of the motor vehicle 1, as well as the centring of the loudspeakers 21 with respect to the seating positions of the occupants, so that the loudspeakers 21 can be effectively utilized for the reproduction of binaural audio.

Finally, it is clear that modifications and variations can be made to the motor vehicle 1 according to the invention, which anyway do not depart from the scope of protection defined by the claims.

In particular, the number and the shape of each of the described and illustrated components could be different, with particular reference to the number of the loudspeakers 21.

Furthermore, the various illustrated embodiments can be combined with one another without any limitations, with particular reference to the various characteristics individually described in the various paragraphs of the description. Each of such characteristics is independently applicable to each of the embodiments described.

## Claims

1. Motor vehicle (1) comprising a windshield (6) and a body (3) in turn comprising a windshield frame (10) with a lower cross member (11) forming a support base supporting the windshield (6) from below and an upper cross member (13) vertically spaced from the lower cross member (11) and attached to the windshield (6), the motor vehicle (1) further comprising a passenger compartment (2) and one or more trim panels carried by the body (3) so as to cover the body (3) internally, thereby defining inner surfaces of the passenger compartment (2), wherein a panel portion (20) of the trim panels faces a lower wall (16) of the upper cross member (13) to cover the upper cross member (13) from below, the motor vehicle (1) comprising at least one loudspeaker (21) arranged between the panel portion (20) and an upper wall (17) of the upper cross member (13) opposite the lower wall (16) according to a thickness of the upper cross member (13).

2. The motor vehicle according to claim 1, wherein the loudspeaker (21) is carried by the upper cross member (13) in a fixed position with respect to the upper cross member (13) .

3. The motor vehicle according to claim 2, wherein the lower wall (16) and the upper wall (17) are part of a plurality of walls enclosing an inner volume (15) of the upper cross member (13), and wherein at least a portion of the loudspeaker (21) at least partially occupies the inner volume (15).

4. The motor vehicle according to claim 3, wherein the lower wall (16) has at least one through-hole (31), the loudspeaker (21) being arranged through the through-hole (31) .

5. The motor vehicle according to claim 3 or 4, wherein the loudspeaker (21) is arranged with respect to the upper cross member (13) such that said plurality of walls defines with the inner volume (15) a resonance cabinet for the loudspeaker (21).

6. The motor vehicle according to claim 1, wherein the lower wall (16) defines a lower end of the upper cross member (13) and has a region (33) conformed concavely with respect to the remainder of the lower wall (16) toward the panel portion (20), said region (33) thus defining a recess (34), wherein the loudspeaker is arranged at least partially at the recess (34).

7. The motor vehicle according to claim 6, wherein the loudspeaker is carried from below by the panel portion (20) in a fixed position with respect to the panel portion (20).

8. The motor vehicle according to any one of the preceding claims, further comprising a sun visor (23) movably coupled to the panel portion (20) with respect to the panel portion (20) between a closed configuration, wherein the sun visor (23) extends adjacent to the panel portion (20), and an open configuration, wherein the sun visor (23) cantilevers downward from the panel portion (20) to partially cover an inner side of the windshield (6), the panel portion (20) having at least a first part (28) arranged between the sun visor (23) in the closed configuration and the lower wall (16).

9. The motor vehicle according to claim 8, wherein the sun visor (23) defines a border (26) of a slot (27), and wherein the panel portion (20) comprises a second part (29) extending through the slot (27), at least when the sun visor (23) is in the closed configuration, and defining a compartment (30) between the second part (29) and the lower wall (16), the loudspeaker (21) being arranged at least partially at the compartment (30).

10. The motor vehicle according to claim 9, wherein the slot (27) defines an opening passing through the sun visor (23).

11. The motor vehicle according to any one of the preceding claims, wherein the panel portion (20) is arranged above a seat (8) for an occupant in the passenger compartment (2) and faces the seat (8), the loudspeaker (21) being arranged frontally above with respect to the seat (8), preferably in a central position with respect to the seat (8).

12. The motor vehicle according to claim 11, wherein said loudspeaker (21) is part of a plurality of loudspeakers (21) arranged between the panel portion (20) and the upper wall (17) symmetrically with respect to a plane of vertical symmetry (22) defining a centre line of the seat (8).
